(19) Europäisches Patentamt
European Patent Office
Office européen des brevets

(11) Veröffentlichungsnummer: **0 000 349**
**B1**

(12) **EUROPÄISCHE PATENTSCHRIFT**

(45) Veröffentlichungstag der Patentschrift: **24.03.82**

(21) Anmeldenummer: **78100257.1**

(22) Anmeldetag: **28.06.78**

(51) Int. Cl.³: **C 08 L 83/04,**
C 08 G 18/06, C 09 D 3/82

# (54) Mit Polyurethan modifizierte Organopolysiloxan-Massen, Verfahren zu deren Herstellung und deren Verwendung.

(30) Priorität: **07.07.77 DE 2730744**

(43) Veröffentlichungstag der Anmeldung:
**24.01.79 Patentblatt 79/2**

(45) Bekanntmachung des Hinweises auf die Patenterteilung:
**24.03.82 Patentblatt 82/12**

(84) Benannte Vertragsstaaten:
**BE DE FR GB NL**

(56) Entgegenhaltungen:
**DE - A - 1 945 474**
**FR - A - 2 256 225**
**FR - A - 2 256 226**
**FR - A - 2 311 812**

(73) Patentinhaber: **BAYER AG**
**Zentralbereich Patente, Marken und Lizenzen**
**D-5090 Leverkusen 1, Bayerwerk (DE)**

(72) Erfinder: **Moretto, Hans-Heinrich, Dr.**
**Formesstrasse 13**
**D-5000 Köln (DE)**
Erfinder: **de Montigny, Armand, Dr.**
**Walter-Flex-Strasse 17**
**D-5090 Leverkusen (DE)**
Erfinder: **Steinberger, Helmut, Dr.**
**Doenhoffstrasse 28**
**D-5090 Leverkusen (DE)**
Erfinder: **Sattlegger, Hans, Dr.**
**Auf dem Heidchen 9**
**D-5068 Odenthal-Gloebusch (DE)**
Erfinder: **Larking, Ingrid**
**Brattäsvägen 19**
**S-43800 Landvetter (SE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**EP 0 000 349 B1**

# Mit Polyurethan modifizierte Organopolysiloxan-Massen, Verfahren zu deren Herstellung und deren Verwendung

Mit anorganischen und organischen Materialien modifizierte Organopolysiloxane sind an sich bekannt. So werden mit anorganischen Füllstoffen, wie z.B. Siliciumdioxid-Aerogelen, Diatomeenerde, Magenesium und/oder Eisenoxid vermischte Organopolysiloxane oder Organo-polysiloxangemische mit zusätzlichen Vernetzungsmitteln und Verarbeitungshilfsstoffen in vielen Bereichen verwendet. Dazu zählt z.B. die Verwendung von sogenannten Ein- oder Zweikomponentensystemen, die unter Einwirkung von Feuchtigkeit aushärten, wobei die Härtung durch die Reaktion von OH-funktionellen Siloxanen mit Vernetzungs- und Härtungskatalysatoren wie z.B. Alkylsilikaten oder Alkyltriacyloxysilanen sowie Wasser herbeigeführt wird. Weitere bekannte Vernetzungssysteme beruhen auf der Reaktion von Si-H-haltigen Siloxanen mit ungesättigten Verbindungen in Gegenwart katalytisch wirkender Peroxide.

Die bereits erwähnten anorganischen und organischen Modifizierungsmittel verleihen den damit entstehenden Organopolysiloxan-Massen unterschiedliche Eigenschaften. Zu den mit organischen Materialien, meist Polymeren, modifizierten Organopolysiloxanen gehören z.B. Blockcopolymere, in denen Organopolysiloxanblöcke mit organischen Polymerblöcken (z.B. Polyäthern, Polycarbonaten, Polycarbodiimiden, Polyurethanen) chemisch verknüpft sind. Derartige Produkte sind z.B in den Patentschriften US—PS 3 402 192, US—PS 3 701 815, US—PS 3 189 662, DT—OS 2 445 220 und DT—OS 2 543 966 beschrieben. Diese Produkte werden im allgemeinen über Mehrstufen verfahren hergestellt.

Es sind ausserdem modifizierte Organopolysiloxanmassen bekannt geworden, die durch radikalische Polymerisation ungesättigter organischer Monomerer in Organopolysiloxanen oder durch Mischen entsprechender Bestandteile entstehen. Dabei bilden sich zum Teil nur mit organischen Polymerpartikeln (z.B. Polyolefin, Polystyrol) gefüllte Massen, zum Teil auch Produkte, in denen das organische Polymer teilweise durch Pfropfung mit dem Siloxan verbunden ist. Derartige Massen und Verfahren zu ihrer Herstellung werden beispielsweise in den Patentschriften US—PS 2 965 593 und US—PS 3 627 836 beschrieben.

Die Eigenschaften dieser zuletzt genannten Produkte sind für eine Reihe von Anwendungen jedoch noch unbefriedigend. Die zur Füllung oder Pfropfung bekannt gewordenen Polymere entstehen aus einem oder mehreren ungesättigten Monomeren, die polymerisierbar sind wie z.B. Äthylen, Vinylchlorid oder 1,3 Butadien.

Diese organischen Polymere haben in der Regel eine geringe Temperaturbeständigkeit. Sie übertragen diese ungünstige Eigenschaft auf die daraus entstehenden gehärteten Organopolysiloxanmassen. Sie besitzen ausserdem ungünstige Elastomereigenschaften wie z.B. hohe Druckverformungsreste. Weiterhin verschlechtern sich die mechanischen Eigenschaften bei erhöhter Temperatur eheblich (z.B. Zugfestigkeit). Die Dauerwärmebeständigkeit, durch die sich die Organopolysiloxane sonst auszeichnen, geht hierbei verloren.

Es war daher die Aufgabe der vorliegenden Erfindung, verbeserte Organopolysiloxanmassen zu schaffen, die auch aus wirtschaftlichen und technischen Gründen die Bedingung erfüllen, dass sie ohne grossen technisch-apparativen Aufwand und ohne lange Reaktionsdauer hergestellt werden können und dass die hergestellten Massen ohne Anwendung von Lösungsmitteln fließfähig und ausreichend lagerstabil sind. Die Massen sollen nach erfolgter Vulkanisation klebfrei aushärten und sich gegenüber anderen organisch modifizierten Organopolysiloxanmassen durch verbesserte mechanische Eigenschaften bei erhöhter Temperatur auszeichnen.

Gegenstand der vorliegenden Erfindung sind mit Polyurethan modifizierte $\alpha,\omega$-Dihydroxypolysiloxane, welche dadurch gekennzeichnet sind, daß das $\alpha,\omega$-Dihydroxypolysiloxan und das Polyurethan als unterscheidbare Phasen vorliegen. Das Polyurethan wird dabei in an sich bekannter Weise durch Polyaddition von Di- oder Polyisocyanaten der allgemeinen Formel

$$OCN—R'—NCO$$

wobei R' für einen gegebenenfalls substituierten Alkylen- oder Arylenrest mit vorzugsweise bis zu 24 C-Atomen steht, an Diole oder Polyole oder Hydroxylgruppen aufweisende Polymere in $\alpha,\omega$-Dihydroxypolysiloxan erzeugt.

Die verbesserten Organopolysiloxanmassen gemäß der vorliegenden Erfindung sind somit als mit Polyurethan gefüllte Organopolysiloxan-Mischungen anzusehen, die aus folgenden zwei Phasen zusammengesetzt sind: (i) einer zusammenhängenden Phase einer Organopolysiloxan-Flüssigkeit und (ii) einer nicht zusammenhängenden Phase aus feinverteilten Teilchen eines Polyurethan-Polymers, das durch Polyaddition des entsprechenden Monomeren oder Monomerengemisches in Gegenwart des $\alpha,\omega$-Dihydroxypolysiloxans und eines die Polyurethanbildung beschleunigenden Katalysators erhalten wurde. Die Mischungen enthalten im allgemeinen etwa 3—95 Gew.-% Polyurethan — bezogen auf die Gesamtmischung. Bevorzugt sind etwa 40—80 Gew.-%, besonders bevorzugt 45—55 Gew.-%.

Die mit Polyurethan gefüllten Organopolysiloxan-Massen der vorliegenden Erfindung werden hergestellt durch intensives Vermischen der Organopolysiloxan-Flüssigkeit mit einem Di- oder Polyol oder Gemischen daraus und nachfolgende Zugabe eines Diisocyanats zu dieser Mischung.

Die für den erfindungsgemässen Gebrauch bevorzugten Organopolysiloxan-Flüssigkeiten sind durch die folgende Formel gekennzeichnet:

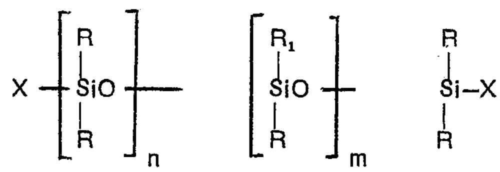

R steht für einen gegebenenfalls substituierten Alkyl-, Alkenyl-, Aryl- oder Halogenalkylrest mit bis zu 10 C-Atomen, $R_1$ für Wasserstoff, einen gegebenenefalls substituierten Alkyl-, Alkenyl-, Aryl- oder Halogenalkylrest mit bis zu 10 C-Atomen; X ist der Hydroxylrest;
$n = 2$ bis 1000, $m = 1$—50.

Es können Gemische aus verschiedenen Polysiloxanen ebenfalls verwendet werden. Ferner sind für die erfindungsgemässe Verwendung Siliconharze, wie sie beispielsweise durch Cohydrolyse von Methyltrichlorsilan und Dimethyldichlorsilan erhältlich sind, alleine oder in Mischung mit den erwähnten Organopolysiloxanen geeignet.

Als erfindungsgemäß einzusetzende Ausgangskomponenten kommen aliphatische, cycloaliphatische, araliphatische, aromatische und heterocyclische Polyisocyanate in Betracht, wie sie z.B. von W. Siefgen in Justus Liebigs Annalen der Chemie, 562, Seiten 75 bis 136, beschrieben werden, beispielsweise Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DAS 1 202 785), 2,4- und 2,6-Hexahydrotoluylendiisocyanat sowie beliebige Gemische dieser Isomeren, Hexahydro-1,3- und/oder -1,4-phenylen-diisocyanat, Perhydro-2,4'- und/oder -4,4'-diphenylmethandiisocyanat, 1,3-und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Triphenylmethan-4,4',4''-triisocyanat, Polyphenyl-polymethylen-polyisocyanate, wie sie durch Anilin-Formaldehyd-Kondensation und anschließende Phosgenierung erhalten und z.B. in den britischen Patentschriften 874 430 und 848 671 beschrieben werden, perchlorierte Arylpolyisocyanate, wie sie z.B. in der deutschen Auslegeschrift 1 157 601 beschrieben werden, Carbodiimidgruppen aufweisende Polyisocyanate, wie sie in der deutschen Patentschrift 1 092 007 beschrieben werden, Diisocyanate, wie sie in der amerikanischen Patentschrift 3 492 330 beschrieben werden, Allophanatgruppen aufweisende Polyisocyanate, wie sie z.B. in der britischen Patentschrift 994 890, der belgischen Patentschrift 761 626 und der veröffentlichten holländischen Patentanmeldung 7 102 524 beschrieben werden, Isocyanuratgruppen aufweisende Polyisocyanate, wie sie z.B. in den deutschen Patentschriften 1 022 789, 1 222 067 und 1 027 394 sowie in den deutschen Offenlegungsschriften 1 929 034 und 2 004 048 beschrieben werden, Urethangruppen aufweisende Polyisocyanate, wie sie z.B. in der belgischen Patentschrift 752 261 oder in der amerikanischen Patentschrift 3 394 164 beschrieben werden, acylierte Harnstoffgruppen aufweisende Polyisocyanate gemäß der deutschen Patentschrift 1 230 778, Biuretgruppen aufweisende Polyisocyanate, wie sie z.B. in der deutschen Patentschrift 1 101 394, in der britischen Patentschrift 889 050 und in der französischen Patentschrift 7 017 514 beschrieben werden, durch Telomerisationsreaktionen hergestellte Polyisocyanate, wie sie z.B. in der belgischen Patentschrift 723 640 beschrieben werden, Estergruppen aufweisende Polyisocyanate, wie sie z.B. in den britischen Patentschriften 965 474 und 1 072 956, in der amerikanischen Patentschrift 3 567 763 und in der deutschen Patentschrift 1 231 688 genannt werden, Umsetzungsprodukte der obengenannten Isocyanate mit Acetalen gemäß der deutschen Patentschrift 1 072 385.

Es ist auch möglich, die bei der technischen Isocyanatherstellung anfallenden Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate").

Beispiele für diese besonders bevorzugten Polyisocyanate sind durch partielle Carbodiimidisierung verflüssigtes 4,4'-Diphenylmethan-diisocyanat wie es beispielsweise gemäß DT—PS 1 568 501 durch Erhitzen in Gegenwart von 2,5 Mol-% an Harnstoff auf 225°C während 1—2 Stunden erhältlich ist oder durch Umsetzung von 1 Mol 4,4'-Diphenylmethan-diisocyanat mit ca. 0,1 — 0,3 Mol Di- oder Polypropylenglykol eines maximalen Molekulargewichts von 700 erhältliches "verflüssigtes" 4,4'-Diphenylmethan-diisocyanat.

Erfindungsgemäß einzusetzende Ausgangskomponenten sind ferner gegebenenfalls Verbindungen mit mindestens zwei gegenüber Isocyanaten reaktionsfähigen Wasserstoffatomen von einem Molekulargewicht in der Regel von 62 — 10,000. Hierunter versteht man neben Aminogruppen, Thiolgruppen oder Carboxylgruppen aufweisenden Verbindungen vorzugsweise Polyhydroxylverbindungen, insbesondere zwei bis acht Hydroxylgruppen aufweisende Verbindungen, speziell selche vom Molekulargewicht 200 bis 10,000, vorzugsweise 1000 bis 6000, z.B. mindestens zwei, in der Regel 2 bis 8, vorzugsweise aber 2 bis 4, Hydroxylgruppen aufweisende Polyester, Polyäther, Polythioäther, Polyacetale, Polycarbonate, Polyesteramide, wie sie für die Herstellung von homogenen und von zellförmigen Polyurethanen an sich bekannt sind. Die genannten höhermolekularen Polyhydroxylverbindungen werden beim erfindungsgemäßen Verfahren oft vorteilhaft im Gemisch mit bis zu 95, vorzugsweise bis zu 50 Gewichtsprozent bezogen auf Gesamtmenge an Polyhydroxylverbindungen an niedermolekularen Polyolen des Molekulargewichtsbereichs 62—200 eingesetzt. Derartige niedermolekulare Polyole sind z.B. Athylenglykol, 1,2-Propandiol, 1,3-Propandiol, 1,2-Butandiol, 1,4-Butandiol, 1,6-Hexandiol, 1,10-Decandiol, Diäthylenglykol, Triäthylenglykol, Tetraäthylenglykol, Dipropylenglykol, Tripropylenglykol, Glycerin, Trimethylolpropan u.dgl.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein. Als Beispiele hierfür seien genannt: Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuredimethylester, Terephthalsäure-bis-glykolester. Als mehrwertige Alkohole kommen z.B. Äthylenglykol, Propylenglykol-(1,2) und -(1,3), Butylenglykol-(1,4) und -(2,3), Hexandiol-(1,6), Octan-diol-(1,8), Neopentylglykol, Cyclohexandimethanol (1,4-Bis-hydroxymethylcyclohexan), 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Methylglykosid, ferner Diäthylenglykol, Triäthylenglykol, Tetraäthylenglykol, Polyäthylenglykols, Dipropylenglykol, Polypropylenglykole, Dibutylenglykol und Polybutylenglykole in Frage. Die Polyester können anteilig endständige Carboxylgruppen aufweisen. Auch Polyester aus Lactonen, z.B. ε-Caprolacton oder Hydroxycarbonsäuren, z.B. ω-Hydroxycapronsäure, sind einsetzbar.

Auch die erfindungsgemäß in Frage kommenden, mindestens zwei, in der Regel zwei bis acht, vorzugsweise zwei bis drei, Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Syroloxid oder Epichlorhydrin mit sich selbst, z.B. in Gegenwart von $BF_3$, oder durch Anlagerung dieser Epoxide, gegebenenfalls im Gemisch oder nacheinander, an Startkomponenten mit reaktionsfähigen Wasserstoffatomen wie Alkohole oder Amine, z.B. Wasser, Äthylenglykol, Propylenglykol-(1,3) oder -(1,2), Trimethylolpropan, 4,4'-Dihydroxydiphenylpropan, Anilin, Ammoniak, Äthanolamin, Äthylendiamin hergestellt. Auch Sucrosepolyäther, wie sie z.B. in den deutschen Auslegeschriften 1 176 358 und 1 064 938 beschrieben werden, kommen erfindungsgemäß in Frage. Vielfach sind solche Polyäther bevorzugt, die überwiegend (bis zu 90 Gew.-% bezogen auf alle vorhandenen OH-Gruppen im Polyäther) primäre OH-Gruppen aufweisen. Auch durch Vinylpolymerisate modifizierte Polyäther, wie sie z.B. durch Polymerisation von Styrol, Acrylnitril in Gegenwart von Polyäthern entstehen (amerikanische Patentschriften 3.383.351, 3.304.273, 3.523.093, 3.110.695, deutsche Patentschrift 1.152.536), sind ebenfalls geeignet, ebenso OH-Gruppen aufweisende Polybutadiene.

Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten um Polythiomischäther, Polythioätherester, Polythioätheresteramide.

Als Polyacetale kommen z.B. die aus Glykolen, wie Diäthylenglykol, Triäthylenglykol, 4,4'-Dioxäthoxy-diphenyldimethylmethan, Hexandiol und Formaldehyd herstellbaren Verbindungen in Frage. Auch durch Polymerisation cyclischer Acetale lassen sich erfindungsgemäß geeignete Polyacetale herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diäthylenglykol, Triäthylenglykol, Tetraäthylenglykol mit Diarylcarbonaten, z.B. Diphenylcarbonat oder Phosgen, hergestellt werden können.

Zu den Polyesteramiden und Polyamiden zählen z.B. die aus mehrwertigen gesättigten und ungesättigten Carbonsäuren bzw. deren Anhydriden und mehrwertigen gesättigten und ungesättigten Aminoalkoholen, Diaminen, Polyaminen und ihre Mischungen gewonnenen, vorwiegend linearen Kondensate.

Auch bereits Urethan- oder Harnstoffgruppen enthaltende Polyhydroxylverbindungen sowie gegebenenfalls modifizierte natürliche Polyole, wie Rizinusöl, Kohlenhydrate, Stärke, sind verwendbar. Auch Anlagerungsprodukte von Alkylenoxiden an Phenol-Formaldehyd-Harze oder auch an Harnstoff-Formaldehyd-harze sind erfindungsgemäß einsetzbar.

Vertreter dieser erfindungsgemäß zu verwenden Verbindungen sind z.B. in High Polymers, Vol. XVI, "Polyurethanes, Chemistry and Technology," verfaßt von Saunders-Frisch, Interscience Publishers, New York, London, Band I, 1962, Seiten 32—42 und Seiten 44—54 und Band II, 1964, Seiten 5—6 und 198—199, sowie im Kunststoff-Handbuch, Band VII, Vieweg-Höchtlen, Carl-Hanser-Verlag, München, 1966, z.B. auf den Seiten 45 bis 71, beschrieben.

Beim erfindungsgemäßen Verfahren kommen die Reaktionspartner in Mengenverhältnissen zum Einsatz, welche einer NCO-Kennzahl von 70—160 entspricht. (Die NCO-Kennzahl 100 bedeutet das Vorliegen von äquivalenten Mengen an Isocyanatgruppen und mit diesen Isocyanatgruppen in Reaktion tretenden aktiven Wasserstoffatomen im Reaktionsgemisch).

Erfindungsgemäß werden ferner oft Katalysatoren mitverwendet. Als mitzuverwendende Katalysatoren kommen solche der an sich bekannten Art infrage, z.B. tertiäre Amine, wie Triäthylamin, Tributylamin, N-Methyl-morpholin, N-Äthyl-morpholin, N-Cocomorpholin, N,N,N',N'-Tetramethyläthylendiamin, 1,4-Diaza-bicyclo-(2,2,2)-octan, N-Methyl-N'-dimethylaminoäthyl-piperazin, N,N-Dimethylbenzylamin, Bis-(N,N-diathylaminoäthyl)-adipat, N,N-Diäthylbenzylamin, Pentamethyldiäthylentriamin, N,N-Dimethylcyclohexylamin, N,N,N',N'-Tetramethyl-1,3-butandiamin, N,N-Dimethyl-$\beta$-phenyläthylamin, 1,2-Dimethylimidazol, 2-Methylimidazol.

Gegenüber Isocyanatgruppen aktive Wasserstoffatome aufweisende tertiäre Amine sind z.B. Triäthanolamin, Triisopropanolamin, N-Methyl-diäthanolamin, N-Äthyl-diäthanolamin, N,N-Dimethyläthanolamin, sowie deren Umsetzungsprodukte mit Alkylenoxiden, wie Propylenoxid und/oder Athylenoxid.

Als Katalysatoren kommen ferner Silaamine mit Kohlenstoff-Silizium-Bindungen, wie sie z.B in der deutschen Patentschrift 1 229 290 beschrieben sind, in Frage, z.B. 2,2,4-Trimethyl-2-silamorpholin, 1,3-Diäthylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden.

Erfindungsgemäß können auch organische Metallverbindungen, insbesondere organische Zinnverbindungen, als Katalysatoren verwendet werden.

Als organische Zinnverbindungen kommen vorzugsweise Zinn(II)-salze von Carbonsäuren wie Zinn(II)-acetat, Zinn(II)-octoat, Zinn(II)-äthylhexoat und Zinn(II)-laurat und die Dialkylzinnsalze von Carbonsäuren, wie z.B. Dibutyl-zinndiacetat, Dibutylzinn-dilaurat, Dibutylzinn maleat oder Dioctylzinndiacetat in Betracht.

Weitere Vertreter von erfindungsgemäß zu verwendenden Katalysatoren sowie Einzelheiten über die Wirkungsweise der Katalysatoren sind in Kunststoff-Handbuch, Band VII, herausgegeben von Vieweg und Höchtlen, Carl-Hanser-Verlag, München 1966, z.B. auf den Seiten 96 bis 102 beschrieben.

Die Katalysatoren werden in der Regel in einer Menge zwischen etwa 0,001 und 10 Gew.-%, bezogen auf die Menge an Verbindungen mit mindestens zwei gegenüber Isocyanaten reaktionsfähigen Wasserstoffatomen von einem Molekulargewicht von 62 bis 10,000, eingesetzt.

Erfindungsgemäß können auch oberflächenaktive Zusatzstoffe (Emulgatoren und Schaumstabilisatoren) mitverwendet werden. Als Emulgatoren kommen z.B. die Natriumsalze von Ricinusölsulfonaten oder auch von Fettsäuren oder Salze von Fettsäuren mit Aminen wie ölsaures Diäthylamin oder stearinsaures Diäthanolamin infrage. Auch Alkali- oder Ammoniumsalze von Sulfonsäuren wie etwa von Dodecylbenzolsulfonsäure oder Dinaphenylmethandisulfonsäure oder auch von Fettsäuren wie Ricinolsäure oder von polymeren Fettsäuren können als oberflächenaktive Zusatzstoffe mitverwendet werden.

Weitere Beispiele von gegebenenfalls erfindungsgemäß mitzuverwendenen oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VI, herausgegeben von Vieweg und Höchtlen, Carl-Hanser-Verlag, München 1966, z.B. auf den Seiten 103 bis 113 beschrieben.

Überraschenderweise sind die erfindungsgemässen Mischungen stabil. Sie eignen sich zur Herstellung von zu Elastomeren härtbaren Formmassen.

Im allgemeinen hat die Hauptmenge der festen Teilchen (mehr als 80%) des Homo- oder Copolymers einen mittleren Durchmesser von etwa 0,3 bis 10 Mikron, wobei einige der Teilchen einen Durchmesser von weniger als 0,3 Mikron haben.

Die erfindungsgemässen Polyurethan-modifizierten Polysiloxan-Flüssigkeiten werden mit Vorteil so hergestellt, dass man bei Raumtemperatur oder erhöhter Temperatur (bis ca. 150°C) ein $\alpha,\omega$-Dihydroxypolysiloxan mit einem Diol, Polyol oder Polyätherol mischt, den Katalysator zugibt, und die entsprechende Menge Isocyanat oder Isocyanatgemisch innerhalb eines vorgegebenen Zeitraums

gleichmässig und stetig zudosiert. Die Zugabe des Isocyanats oder der Isocyanatmischung erfolgt vorzugsweise bei Temperaturen von 60 bis 120°C.

Die Geschwindigkeit der Isocyanatzugabe (etwa 1—8 Stunden — je nach Ansatzgröße) wird im allgemeinen so gesteuert, daß die freiwerdende Reaktionswärme abgeführt werden kann und die gewünschte Reaktionstemperatur konstant gehalten wird.

Während des Herstellvorgangs steigt die Viskosität der Mischung beträchtlich an. Das Ausmaß des Viskositätsanstiegs ist abhängig von der Anfangsviskosität der verwendeten Siloxankomponente, vom Füllgrad durch das erzeugte Polyurethan und Verteilungsgrad der diskontinuierlichen Phase

Die Feinteiligkeit der in der Organosiloxanphase verteilten Polyurethanphase hängt von der Rührgeschwindigkeit und der Bauart des verwendeten Rührers, der Reaktionstemperatur und der Viskosität der Organosiloxanphase ab.

Die erhaltenen Polyurethan-modifizierten Polysiloxane stellen weiße, meist nicht-transparente, fließfähige und vernetzbare Massen mit mittlerer bis hoher Viskosität dar, die mit vielen der üblichen Katalysatoren, die für die Silanol-kondensation geeignet sind, gehärtet werden können.

Als Vernetzungsmittel eignen sich solche Substanzen, die herkömmlicherweise zur Herstellung von Ein- oder Zweikomponentensystemen eingesetzt werden. Als solche kommen beispielsweise Alkoxysiliziumverbindungen, Tetraalkoxysilane, Alkylpolysilikate und Acyloxysiliziumverbindungen in Frage.

Die Herstellung von Ein- oder Zweikomponentenmassen auf Basis von Polyurethan-Polysiloxan-Mischpolymeren erfolgt durch Vermischen der Polyurethan-Siloxan-Masse mit der Vernetzerkomponente und gegebenenfalls den Füllstoffen und/oder Weichmachern in einem handelsüblichen Mischer oder Kneter. Als Füllstoffe können beispielsweise Quarzmehl, Kreide oder Diatomeenerde oder pyrogen in der Gasphase erzeugtes $SiO_2$ oder andere fein verteilte Metalloxide wie z.B. $TiO_2$, $Fe_2O_3$, dienen.

Wie erwähnt, können gegebenenfalls Weichmacher zugesetzt werden. Als solche werden flüssige inerte Polydiorganosiloxane eingesetzt, z.B. $\alpha,\omega$-Trimethyl-siloxyendgestoppte Polydimethylsiloxane.

Das zur Vulkanisation der Mischpolymeren erforderliche Wasser kann durch Luftfeuchtigkeit oder durch direktes Einmischen den härtbaren Mischpolymerzusammensetzungen beigefügt werden.

Polyuretan-modifizierte Organopolysiloxan-Massen sind, wie erwähnt, sowohl in Substanz für sich verwendbar, als auch als Zusatzkomponente in anderen Polymermassen.

Sie zeichnen sich aus durch verbesserte Eigenschaften in bezug auf Temperaturbeständigkeit, Zugfestigkeit bei erhöhter Temperatur, niedrigere Druckverformungsreste und gute Haftung (der gehärteten Produkte) auf Glas, Beton, Stein und Metallen.

Nachfolgend wird die Erfindung anhand von Beispielen näher erläutert. Die nachfolgend angegebenen Prozentangaben bedeuten, wenn nicht ausdrücklich anders vermerkt. Gewichtsprozente.

## Beispiel 1

Dieses Beispiel beschreibt die Herstellung einer Dispersion aus 50% Polyurethan auf Basis von Toluylendiisocyanat und Dipropylenglykol im Molverhältnis 1:1 und 50% $\alpha,\omega$-Dihydroxypolydimethylsiloxan.

Man erwärmt eine Mischung aus 620 g Polydimethylsiloxan mit endständigen Hydroxylgruppen und einer Viskosität von 18000 mPa.s (20°C) und 270 g Dipropylenglykol (Isomerengemisch) auf 80°C und dosiert innerhalb einer Stunde eine Mischung aus 349,5 g Toluylendiisocyanat (Isomerengemenge aus 80% 2,4- und 20% 2,6-Toluylendiisocyanat) und 1,8 g Triäthylamin gleichmässig unter Rühren hinzu. Die Reaktionstemperatur wird während der Zugabedauer zwischen 80 und 90°C gehalten. Nach beendeter Zugabe wird eine weitere Stunde nachgerührt und anschliessend abgekühlt. Man erhält eine weiße, hochviskose Masse (Eta = 2. $10^6$ mPa.s), deren weitere Verarbeitung in Beispiel 6 näher beschrieben ist.

Zur Herstellung einer kalt härtenden Folie werden 50 g dieser Masse mit 2,5 g Äthyltriacetoxysilan und 0.4 g Dibutylzinndilaurat gehärtet. Man erhält ein elastisches Produkt mit einer Shore-A-Härte von 32.

## Beispiel 2

Eine Mischung aus 1500 g Polydimethylsiloxan des Beispiels 1 und 804 g Dipropylenglykol wird auf 80°C erhitzt und eine Mischung aus 696 g Toluylendiisocyanat des Beispiels 1 und 3,5 g Triäthylamin innerhalb einer Stunde bei 80°C unter Rühren zugegeben. Das Molverhältnis aus Isocyanaten des Toluylendiisocyanats und Hydroxylgruppen des Dipropylenglykols beträgt 1:2.

Nach beendeter Zugabe wird 1 Stunde bei 80°C gerührt und anschliessend abgekühlt.

Das erhaltene gelblich-weiße Produkt hat eine Viskosität von 217 000 mPa.s (20°C).

Eine aus dieser Masse gemäss Beispiel 1 hergestellte und ausgehärtete Folie hat eine Shore-A-Härte von 43.

## Beispiel 3

Eine Mischung aus 1500 g Polymethylsiloxan des Beispiels 1 und 909,5 g Dipropylenglykol wird auf 80°C erhitzt und eine Mischung aus 800,6 g Toluylendiisocyanat des Beispiels 1 und 2,9 g Triäthylamin innerhalb einer Stunde bei 80°C unter Rühren zugegeben. Das Molverhältnis aus Isocyanatgruppen des Toluylendiisocyanats und Hydroxylgruppen des Dipropylenglykols beträgt 1:2.

Nach beendeter Zugabe wird 1 Stunde bei 80°C gerührt und anschliessend abgekühlt.

Das erhaltene weisse Produkt hat eine Viskosität 230 000 mPa.s (20°C).

Eine aus dieser Masse gemäss Beispiel 1 hergestellte und ausgehärtete Folie hat eine Shore-A-Härte von 11.

Beispiel 4

Verwendet man analog zu Beispiel 3 anstelle eines Polydimethylsiloxans der Viskosität 18 000 mPa.s (20°C) ein solches mit einer Viskosität von 10 000 mPa.s (20°C) so hat die resultierende Polyurethan-modifizierte Masse eine Viskosität von 85 000 mPa.s (20°C). Eine hieraus gemäss Beispiel 1 hergestellte Folie besitzt eine Shore-A-Härte von 13.

Beispiel 5

368,5 g Dipropylenglykol werden in 600 ml trockenem Toluol gelöst und bei 80°C innerhalb einer Stunde unter Rühren mit einer Mischung aus 239,2 g Toluylendiisocyanat des Beispiels 1 und 2,8 g Triäthylamin versetzt. Nach beendeter Zugabe wird das Lösungsmittel destilliert. Man erhält eine gelbliche, zähe Masse, deren weitere Verarbeitung in Beispiel 6 näher beschrieben ist.

Beispiel 6

Eine Mischung aus 1200 g des Produkts aus Beispiel 1, 600 g des Produkts aus Beispiel 4 und 600 g Polydimethylsiloxan des Beispiels 1 werden 2 Stunden bei 70°C gemischt.

Die daraus erhaltene weisse, fließfähige Mass hat eine Viskosität von 300 000 mPa.s. Die Große der dispergierten Teilchen wurde zu etwa 1 bis 2,5 Mikron ermittelt.

Die Zusammensetzung einer kalt härtenden Masse sowie die Eigenschaften des gehärteten Produkts werden in Beispiel 10, Tabelle 1 (Einkomponentensystem) und Tabelle 2 (Zweikomponentensystem) angegeben.

Beispiel 7

Eine Lösung von 402 g Trimethylolpropan und 576 g Polydimethylsiloxan des Beispiels 1 in 1150 g trockenem Toluol wird aus 80°C erwärmt und eine Mischung aus 174 g Toluylendiisocyanat des Beispiels 1 und 5 g Triäthylemin bei 80 bis 100°C innerhalb von 2 Stunden unter Rühren zugegeben. Nach Abdestillieren des Lösungsmittels erhält man eine weisse Masse, die in Beispiel 8 weiter verwendet wird.

Beispiel 8

Eine Mischung aus 50% des Produktes aus Beispiel 1 und 50% des Produktes aus Beispiel 7 ergibt eine weisse, fließfähige Dispersion mit einer Viskosität von 300 000 mPa.s. (20°C). Die mittlere Teilchengrösse der dispergierten Polyurethanpartikel wurde zu 1 bis 2 μm gefunden.

Die Zusammensetzung einer kalt härtenden Masse sowie die Eigenschaften des gehärteten Produkts sind in Beispiel 9, Tabelle 1 (Einkomponentensystem) und Tabelle 2 (Zweikomponentensystem), gegeben.

Beispiel 9

Dieses Beispiel gibt eine Übersicht über die Zusammensetzung einiger kalt härtender Massen und Eigenschaften daraus hergestellter gehärteter Produkte.

| Zusammensetzung % | Beispiel 5 | Beispiel 8 |
|---|---|---|
| Produkt aus Beispiel | 60,9 | 66,4 |
| Polydimethylsiloxan-Öl (1400 mPa.s) | 22,7 | 26,1 |
| Äthyltriacetoxysilan | — | 4,3 |
| $SiO_2$ (200 $m^2/g$, mit $(CH_3)_2SiCL_2$ beladen) | 4,5 | 3,2 |
| Dibutyldizinndiacetat | — | 0,01 |
| Tetraisobutyltitanat | 5,3 | — |
| Dibutylzinndilaurat | 1,1 | — |
| Methyl-äthoxy-bis-[N-methylbenzamido]-silan | 5,7 | |

| Eigenschaften | Beispiel 5 | Beispiel 8 |
|---|---|---|
| E-Modul DIN 53 504 $N/mm^2$ | 3,33 | 1,60 |
| Zugfestigkeit DIN 53 504 $N/mm^2$ | 15,0 | 9,0 |
| Bruchdehnung DIN 53 504 in % | 526 | 476 |
| Shore-A-Härte DIN 53 505 | 17 | 8 |

TABELLE 1

Zusammensetzung und Eigenschaften von Einkomponentensystemen

| Zusammensetzung % | Beisp. 5 | Beisp. 8 | Beisp. 5 | Beisp. 8 |
|---|---|---|---|---|
| Produkt aus Beispiel | 100 | 100 | 50 | 50 |
| α,ω-Dihydroxypolydimethylsiloxan (2000 mPa.s) | – | – | 50 | 50 |
| Kieselsäuretetraäthylester | 2 | 2 | – | – |
| Mischung aus 97% Tetraäthoxysilan und 3% Dibutylzinndilaurat | – | – | 6 | 6 |
| Eigenschaften | | | | |
| Zugfestigkeit $N/mm^2$ | 170 | 100 | 93 | 73 |
| Dehnung % | 310 | 280 | 150 | 160 |
| Shore-A-Härte | 32 | 24 | 34 | 28 |
| Elastizität % | 60 | 37 | 80 | 69 |
| Weiterreißfestigkeit nach: $N/mm^2$ | | | | |
| ASTM 624 B | 4,74 | 4,34 | 1,74 | 2,34 |
| ASTM 624 C | 7,73 | 6,21 | 3,14 | 3,25 |
| DIN 53 515 | 2,93 | 3,01 | 0,88 | 1,10 |
| Dichte $g/cm^3$ | 1,085 | 1,089 | 1,029 | 1,032 |

TABELLE 2

Zusammensetzung und Eigenschaften von Zweikomponentensystemen

Beispiel 10

Eine Lösung von 35,7 g Dipropylenglykol, 8,9 g Trimethylolpropan und 76,5 g Polymethylsiloxan des Beispiels 1 in 150 g trockenem Toluol wird auf 100°C erwärmt und innerhalb einer Stunde eine Mischung von 0,4 g Triäthylamin und 31,9 g Toluylendiisocyanat zugegeben. Man rührt eine weitere Stunde bei 100°C nach und destilliert anschliessend das Lösungsmittel ab. Der Rückstand hat eine Viskosität von 72 000 mPa.s (20°C) Eine daraus nach Beispiel 1 hergestellte gehärtete Folie hat die Shore-A-Härte 16.

Beispiel 11

Zu einer auf 80°C erwärmten Mischung aus 100 g Polydimethylsiloxan des Beispiels 1,40 g Dipropylenglykol und 2,1 g Glycerin wird eine Mischung von 57,9 g Toluylendiisocyanat des Beispiels 1 und 0,3 g Triäthylamin unter Rühren innerhalb von 0,5 Stunden zugegeben. Nach beendeter Zugabe wird 2 Stunden bei 80°C nachgerührt. Man erhält eine schwach gelbliche, vernetzbare Masse mit einer Viskosität von 220 000 mPa.s (20°C). Eine daraus nach Beispiel 1 hergestellte gehärtete Folie hat die Shore-A-Härte 25.

Beispiel 12

Der Versuch des Beispiels 3 wird mit der Abweichung durchgeführt, dass anstelle von Dipropylenglykol Buten-(2)-diol(1,4) verwendet wird.

Man erhält ein hellbraunes, homogenes und vernetzbares Produkt mit einer Viskosität von 145 000 mPa.s.

Eine daraus nach Beispiel 1 hergestellte gehärtete Folie hat die Shore-A-Härte 17.

Beispiel 13

Der Versuch des Beispiels 3 wird mit der Abweichung durchgeführt, dass anstelle von Dipropylenglykol Butandiol-1,4) verwendet wird.

Man erhält ein weisses vernetzbares Produkt mit einer Viskosität von 143 000 mPa.s

Eine daraus nach Beispiel 1 hergestellte gehärtete Folie hat die Shore-A-Härte 13.

Beispiel 14.

Der Versuch des Beispiels 3 wird mit der Abweichung durchgeführt, dass anstelle von Dipropylenglykol Propandiol-(1,3) verwendet wird.

Man erhält eine weisse vernetzbare Masse mit einer Viskosität von 182 000 mPa.s.

Eine daraus nach Beispiel 1 hergestellte gehärtete Folie hat die Shore-A-Härte 13.

Beispiel 15

Dieses Beispiel illustriert die Herstellung einer Dispersion aus 50% Polyurethan auf Basis von Toluylendiisocyanat und einem Polyester im Molverhältnis 1:0,9 und 50% eines $\alpha,\omega$-Dihydroxypolydimethylsiloxans.

Eine Lösung von 100 g linearem Polyester auf Basis von Adipinsäure und Äthylenglykol mit einem Hydroxygruppengehalt von 1,65% und 107,5 g Polydimethylsiloxan des Beispiels 1 in 200 g Toluol wird auf 80°C erwärmt und hierzu innerhalb eines Stunde eine Mischung von 7,6 g Toluylendiisocyanat des Beispiels 1 und 0,5 g Triäthylamin zugegeben. Nachdem während einer Stunde bei 80°C nachgerührt wurde, erhält man nach Abdestillieren des Lösungsmittels ein weisses, vernetzbares Produkt.

Beispiel 16

Eine Mischung aus 1500 g Polydimethylsiloxan des Beispiels 1,909,5 g Dipropylenglykol und 1,5 g Äthylendiaminomethyldimethyläthoxysilan wird auf 80°C erwärmt und 1 Stunde gerührt. Nun werden innerhalb einer Stunde bei 80°C 800,6 g Toluylendiisocyanat des Beispiels 1 zugegeben und 2 Stunden bei gleicher Temperatur nachgerührt. Man erhält eine weisse Masse mit einer Viskosität von 230 000 mPa.s (20°C).

Eine daraus nach Beispiel 1 hergestellte gehärtete Folie hat die Shore-A-Härte 16.

Beispiel 17

Der Versuch des Beispiels 3 wird mit der Abweichung durchgeführt, dass man als Katalysator anstelle des Triäthylamins 0,06 ml Dibutylzinndilaurat einsetzt.

Man erhält ein weisses Produkt mit einer Viskosität von 185 000 mPa.s.

Eine daraus nach Beispiel 1 hergestellte gehärtete Folie hat die Shore-A-Härte 15.

**Patentansprüche**

1. Mit Polyurethan modifizierte $\alpha,\omega$-Dihydroxypolysiloxane, dadurch gekennzeichnet, daß das $\alpha,\omega$-Dihydroxypolysiloxan und das Polyurethan als unterscheidbare Phasen vorliegen.

2. Verfahren zur Herstellung von mit Polyurethan modifizierten $\alpha,\omega$-Dihydroxypolysiloxanen, dadurch gekennzeichnet, daß das Polyurethan durch Polyaddition von Di- oder Polyisocyanaten der allgemeinen Formel

$$OCN—R'—NCO$$

wobei

R' für einen gegebenenfalls auch mit NCO-Gruppen substituierten Alkylen- oder Arylenrest mit vorzugsweise bis zu 24 C-Atomen steht, an Diole, Polyole oder Hydroxylgruppen aufweisende Polymere in $\alpha,\omega$-Dihydroxypolysiloxan erzeugt wird.

3. Verwendung der mit Polyurethan modifizierten $\alpha,\omega$-Dihydroxypolysiloxane zur Herstellung von unter Einfluß von Feuchtigkeit härtbaren Ein- oder Zweikomponentensystemen.

## Revendications

1. $\alpha,\omega$-dihydroxypolysiloxanes modifiés par un polyuréthane, caractérisés en ce que l'$\alpha,\omega$-dihydroxypolysiloxane et le polyuréthane se présentent sous forme de phases différenciables.

2. Procédé de préparation d'$\alpha,\omega$-dihydroxypolysiloxanes modifiés par un polyuréthane, caractérisé en ce qu'on forme le polyuréthane par polyaddition de diisocyanates ou de polyisocyanates de formule générale:

OCN—R'—NCO

dans laquelle
R' représente un groupe arylène ou un groupe alkylène éventuellement substitué également par des groupes NCO et contenant, de préférence, jusqu'à 24 atomes de carbone, à des diols, des polyols ou des polymères comportant des groupes hydroxy dans l'$\alpha,\omega$-dihydroxypolysiloxane.

3. Utilisation des $\alpha,\omega$-dihydroxypolysiloxanes modifiés par un polyuréthane pour la préparation de systèmes à un composant ou à deux composants, durcissables sous l'influence de l'humidité.

## Claims

1. $\alpha,\omega$-Dihydroxypolysiloxanes modified with polyurethane, characterised in that the $\alpha,\omega$-dihydroxypolysiloxane and the polyurethane are present as discernible phases.

2. Method of manufacturing $\alpha,\omega$-dihydroxypolysiloxanes modified with polyurethane, characterised in that the polyurethane is produced by a polyaddition reaction of di- or poly-isocyanates of the general formula

OCN—R'—NCO

wherein
R' represents an alkylene or arylene radical with preferably up to 24 C atoms which is optionally also substituted by NCO groups, with diols, polyols or polymers containing hydroxyl groups, in $\alpha,\omega$-dihydroxypolysiloxane.

3. Use of the $\alpha,\omega$-dihydroxypolysiloxanes modified with polyurethane for producing one- or two-component systems which cure under the effect of moisture.